# FASCICULE DE BREVET EUROPEEN

(11) **EP 3 659 477 B1**
(45) Date de publication et mention de la délivrance du brevet: **05.01.2022**
(21) Numéro de dépôt: 19211239.9
(22) Date de dépôt: 25.11.2019
(51) Int. Cl.: A47J 37/12

(54) **SOCLE DE VIDANGE EMPILABLE POUR APPAREIL ELECTRIQUE DE CUISSON**
STAPELBARER ABLAUFSOCKEL FÜR ELEKTROKOCHGERÄT
STACKABLE DRAINAGE BASE FOR AN ELECTRIC COOKING APPLIANCE

(30) Priorité: 30.11.2018 FR 1872134
(43) Date de publication de la demande: 03.06.2020
(73) Titulaire: SEB S.A., 69130 Ecully (FR)
(72) Inventeur: SCHWARTZ, Delphine, 21000 DIJON (FR)
(74) Mandataire: SEB Développement

(56) Documents cités:
- EP-A1- 1 304 062
- EP-A1- 1 504 705
- EP-A1- 2 103 240
- US-A1- 2018 153 348

## Description

### Domaine technique

La présente invention concerne de manière générale le domaine technique des appareils électriques de cuisson comportant une cuve apte à recevoir un bain de cuisson, ainsi que leurs accessoires.

La présente invention concerne notamment, mais non exclusivement, les friteuses électriques comportant une cuve apte à recevoir un bain d'huile ou de matière grasse, pour frire des aliments, ainsi que leurs accessoires.

La présente invention concerne plus particulièrement un socle de vidange prévu pour être utilisé avec un appareil électrique de cuisson comportant une cuve munie d'un dispositif de vidange, ledit socle de vidange étant configuré pour porter ledit appareil électrique de cuisson durant l'opération de vidange.

### Technique antérieure

Le document EP1504705 divulgue un appareil de cuisson comportant une cuve munie d'un dispositif de vidange. La cuve peut être disposée sur un réceptacle de vidange pour procéder à la vidange du contenu de la cuve dans le réceptacle de vidange. Le réceptacle de vidange est associé à un couvercle amovible. Toutefois le couvercle doit être retiré pour pouvoir procéder à la vidange du contenu de la cuve.

Le document EP2103240 divulgue un appareil de cuisson comportant une cuve munie d'un dispositif de vidange. La cuve est associée à un réceptacle de vidange comportant un couvercle muni d'un orifice de remplissage. Toutefois le réceptacle de vidange est inséré dans une ouverture latérale d'un socle portant l'appareil de cuisson.

### Résumé de l'invention

Un objet de la présente invention est de proposer des socles de vidange utilisés avec un appareil électrique de cuisson comportant une cuve munie d'un dispositif de vidange, dont l'utilisation soit sûre.

Un autre objet de la présente invention est de proposer un ensemble de cuisson comprenant un appareil électrique de cuisson et un réceptacle de vidange, dont la construction soit économique.

Un autre objet de la présente invention est de proposer un ensemble de cuisson comprenant un appareil électrique de cuisson et un réceptacle de vidange, dont l'encombrement soit limité.

Ces objets sont atteints avec un socle de vidange configuré pour porter un appareil électrique de cuisson comportant une cuve munie d'un dispositif de vidange comprenant un clapet susceptible d'occuper une position de rappel stable fermée et une position ouverte, le socle de vidange comportant un réceptacle de vidange et un couvercle de réceptacle, le socle de vidange présentant un organe de commande configuré pour déplacer le clapet en position ouverte lorsque ledit socle de vidange porte l'appareil électrique de cuisson, du fait que le couvercle de réceptacle ménage un passage pour l'écoulement du bain de cuisson dans le réceptacle de vidange lorsque le socle de vidange porte l'appareil électrique de cuisson, que le socle de vidange comporte un bouchon de couvercle obturant le passage lorsque le socle de vidange est en configuration de stockage du bain de cuisson contenu dans le réceptacle de vidange, que le réceptacle de vidange présente une face inférieure comportant un logement, et que le réceptacle de vidange et le couvercle de réceptacle peuvent occuper une configuration d'empilement dans laquelle le réceptacle de vidange repose sur le couvercle de réceptacle et dans laquelle le logement loge le bouchon de couvercle fermant le passage du couvercle de réceptacle. L'utilisateur peut ainsi utiliser plusieurs socles de vidange pour recueillir et conserver des bains de cuisson différents, en empilant ces socles de vidange, ce qui permet d'obtenir une configuration particulièrement compacte.

Avantageusement alors, l'organe de commande est issu de la face inférieure du réceptacle de vidange et le logement s'étend en dessous de l'organe de commande. Cette disposition permet de simplifier la construction du socle de vidange.

Avantageusement encore, le couvercle de réceptacle comporte des butées latérales configurées pour limiter les mouvements latéraux du réceptacle de vidange reposant sur le couvercle de réceptacle. Cette disposition permet de laisser une certaine liberté de positionnement d'un socle de cuisson sur un autre socle de cuisson.

Avantageusement encore, le couvercle de réceptacle présente une face supérieure comportant des dépressions et les butées latérales sont formées par des parois latérales des dépressions. Cette disposition permet de laisser une liberté de positionnement d'un socle de cuisson sur un autre socle de cuisson selon plusieurs directions.

Avantageusement alors, le couvercle de réceptacle présente plusieurs côtés principaux, et l'une au moins des dépressions est agencée dans un angle défini par deux côtés principaux adjacents. Cette disposition permet de réduire l'encombrement du socle de vidange.

Avantageusement encore, le couvercle de réceptacle présente quatre côtés principaux, et chacune des dépressions est agencée dans un angle défini par deux côtés principaux adjacents. Cette disposition permet de réduire l'encombrement du socle de vidange, tout en facilitant le positionnement d'un socle de cuisson sur un autre socle de cuisson.

Avantageusement encore, le couvercle de réceptacle présente une bordure périphérique, et les butées latérales sont entourées par la bordure périphérique. Cette disposition permet de faciliter le positionnement d'un socle de cuisson sur un autre socle de cuisson.

Avantageusement encore, le réceptacle de vidange comporte des pieds de réceptacle espacés les uns des autres et configurés pour reposer sur le couvercle de réceptacle lorsque le réceptacle de vidange et le couvercle de réceptacle occupent la configuration d'empilement. Cette disposition permet de faciliter la manipulation des socles de vidange.

Avantageusement alors, les pieds de réceptacle reposent dans les dépressions lorsque le réceptacle de vidange et le couvercle de réceptacle occupent la configuration d'empilement. Cette disposition permet d'obtenir une bonne stabilité lorsque deux socles de vidange sont superposés.

Avantageusement encore, le réceptacle de vidange comporte des appuis supérieurs s'étendant sous le couvercle de réceptacle lorsque le couvercle de réceptacle ferme le réceptacle de vidange. Si désiré, le couvercle de réceptacle peut venir en appui sur les appuis supérieurs. Cette disposition permet d'améliorer la stabilité de l'appareil électrique de cuisson disposé sur le socle de vidange.

Avantageusement alors, les appuis supérieurs sont issus d'une paroi latérale du réceptacle de vidange. Cette disposition permet de simplifier la construction du réceptacle de vidange.

Avantageusement encore, les appuis supérieurs appartiennent à des piliers s'étendant depuis un fond de réceptacle du réceptacle de vidange. Cette disposition permet de rigidifier la paroi latérale du réceptacle de vidange lorsqu'un socle de vidange porte un autre socle de vidange, ce qui contribue à améliorer la stabilité de l'autre socle de vidange porté par le socle de vidange. Cette disposition permet également de réduire l'encombrement des socles de vidange superposés.

Avantageusement alors, les appuis supérieurs sont agencés en dessous des dépressions.

Avantageusement encore, le réceptacle de vidange comporte une paroi périphérique extérieure entourant une paroi latérale du réceptacle de vidange, et la paroi périphérique extérieure s'étend à distance d'une partie inférieure de la paroi latérale du réceptacle de vidange. Cette disposition permet d'éviter un contact direct avec la paroi latérale du réceptacle de vidange. Cette disposition permet également de rigidifier le réceptacle de vidange.

Avantageusement alors, la paroi périphérique extérieure s'étend autour du couvercle de réceptacle lorsque le réceptacle de vidange et le couvercle de réceptacle occupent la configuration d'empilement. Cette disposition permet d'améliorer la compacité de l'empilement.

### Brève description des dessins

L'invention sera mieux comprise à l'étude d'un exemple de réalisation, pris à titre nullement limitatif, illustré dans les figures 1 à 15 annexées, et de variantes.
La figure 1 représente un exemple de réalisation d'un ensemble de cuisson selon l'invention, comprenant un appareil électrique de cuisson et un socle de vidange, représenté en élévation, l'appareil électrique de cuisson étant représenté de manière éclatée.
La figure 2 représente en perspective et en éclaté l'appareil électrique de cuisson et le socle de vidange de l'ensemble de cuisson illustré sur la figure 1.
La figure 3 est une vue de côté de l'appareil électrique de cuisson illustré sur les figures 1 et 2.
La figure 4 est une vue en perspective de dessous de l'appareil électrique de cuisson illustré sur les figures 1, 2 et 3.
La figure 5 est une vue en perspective et en éclaté du socle de vidange illustré sur

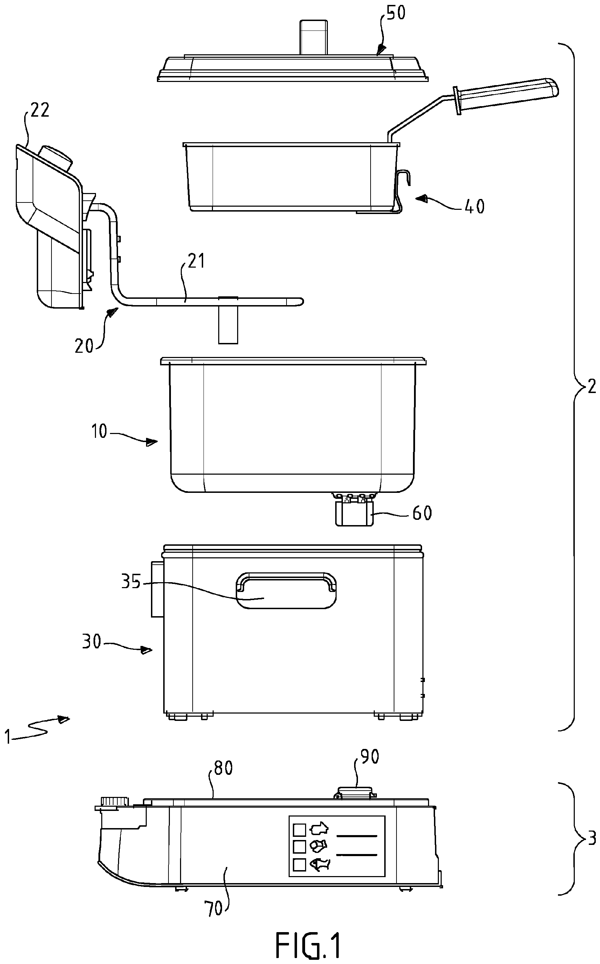

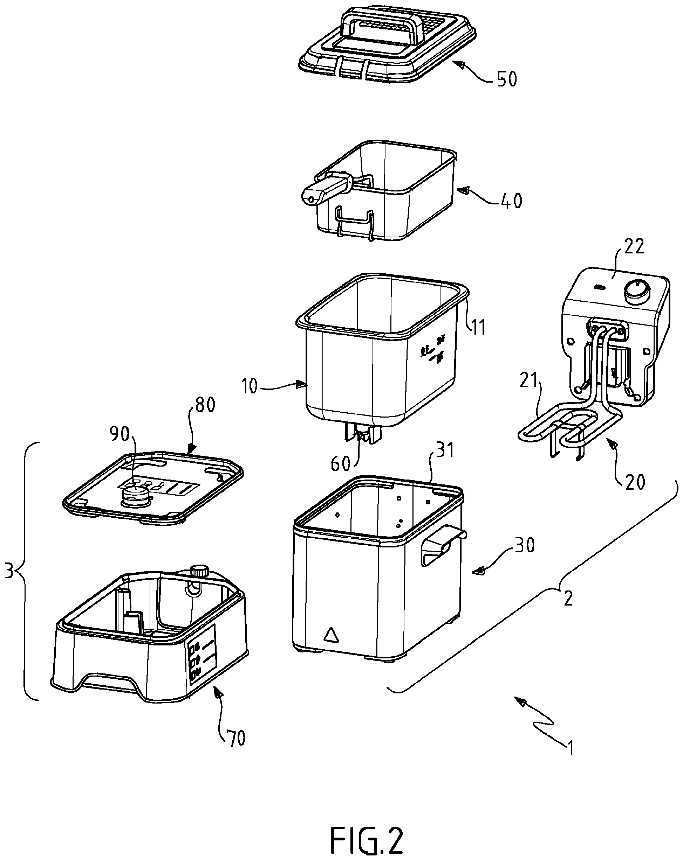

les figures 1 et 2.

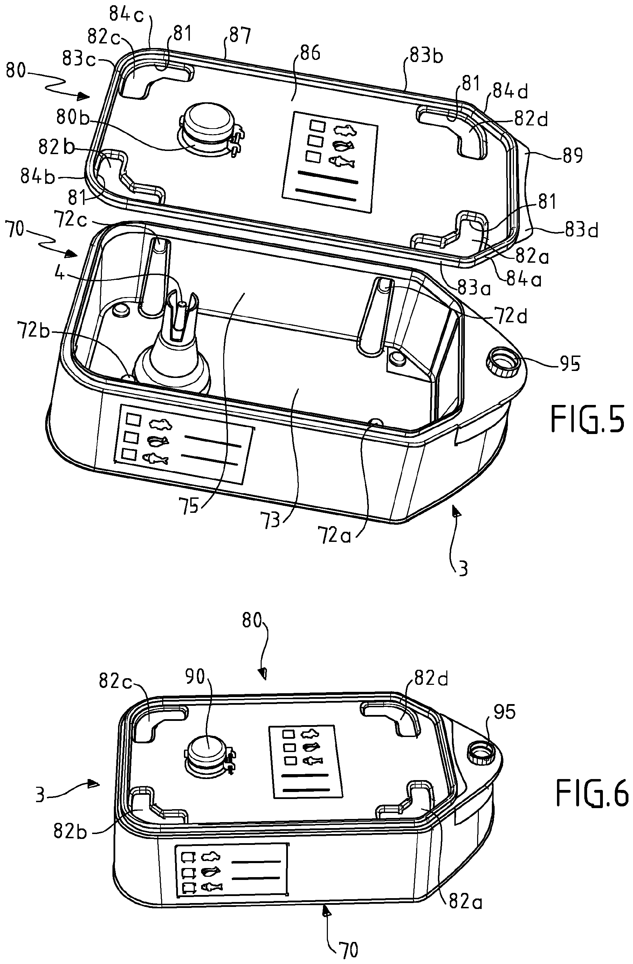

La figure 6 est une vue en perspective assemblée du socle de vidange illustré sur
les figures 1, 2 et 5.

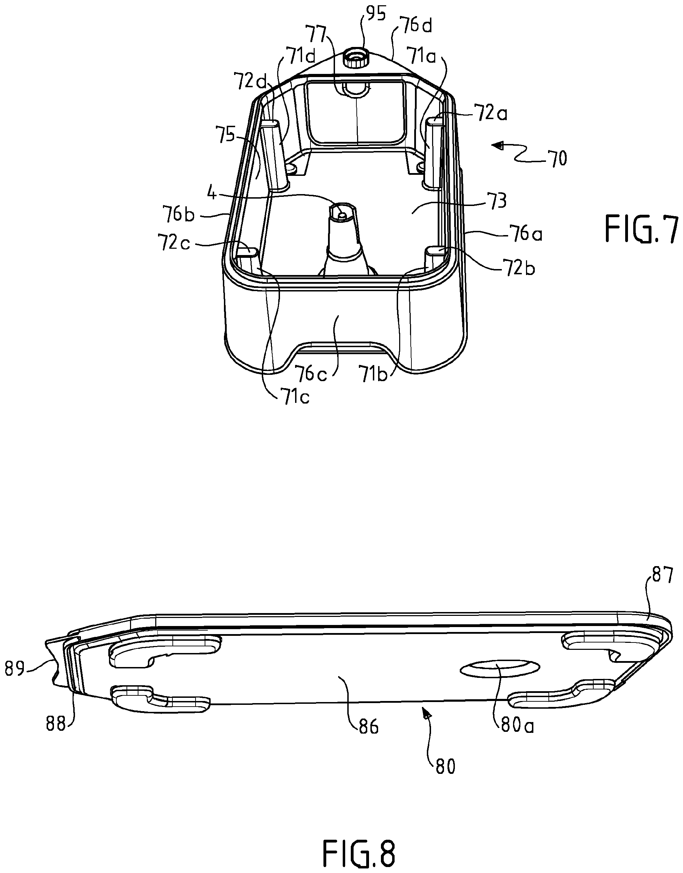

La figure 7 est une vue en perspective de dessus d'un réceptacle de vidange appartenant au socle de vidange illustré sur les figures 1, 2, 5 et 6.
La figure 8 est une vue en perspective de dessous d'un couvercle de réceptacle appartenant au socle de vidange illustré sur les figures 1, 2, 5 et 6.

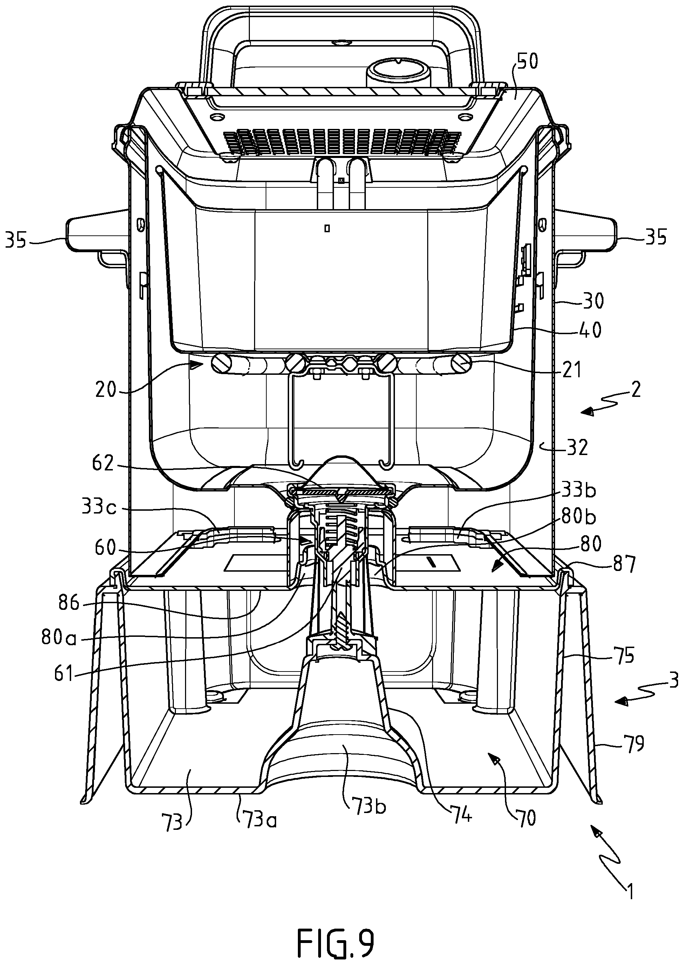

La figure 9 est une vue en élévation et en coupe transversale de l'ensemble de cuisson illustré sur les figures 1 et 2, dans une configuration de vidange correspondant à une configuration de vidange recommandée dans laquelle le couvercle de réceptacle est utilisé pour fermer le réceptacle de vidange.

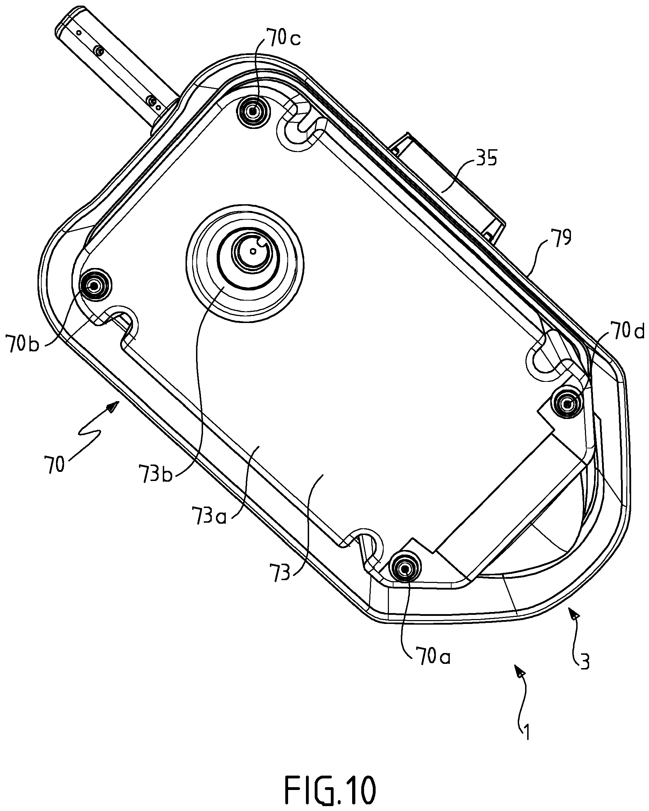

La figure 10 est une vue de dessous de l'ensemble de cuisson illustré sur les figures 1, 2 et 9, dans la configuration de vidange correspondant à la configuration de vidange recommandée.

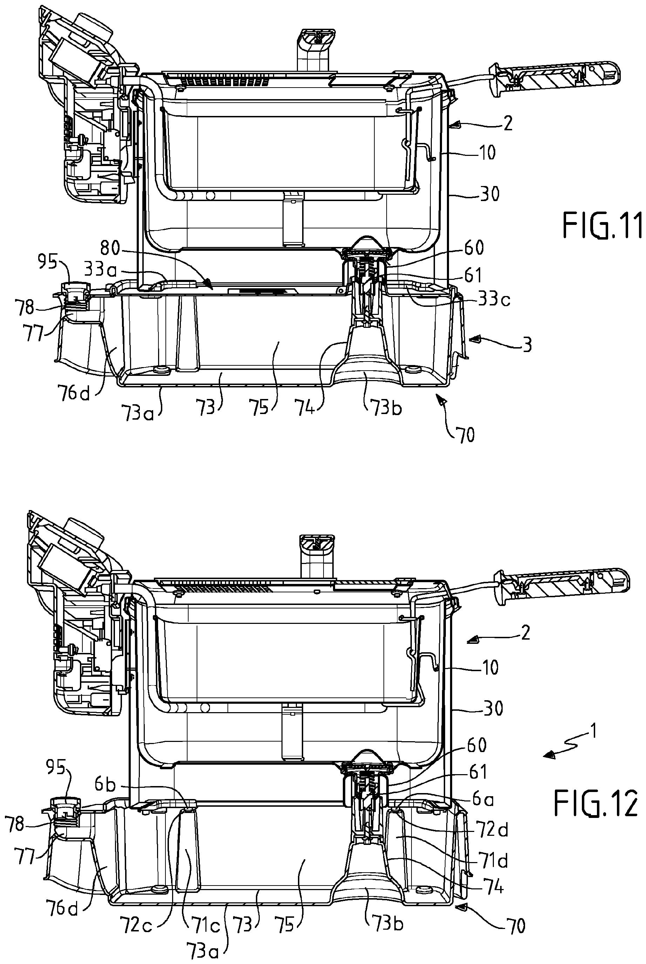

La figure 11 est une vue en élévation et en coupe transversale de l'ensemble de cuisson illustré sur les figures 1, 2, 9 et 10, dans la configuration de vidange correspondant à la configuration de vidange recommandée.
La figure 12 est une vue en élévation et en coupe transversale de l'ensemble de cuisson illustré sur les figures 1, 2, 9, 10, 11, dans une configuration de vidange correspondant à une configuration de vidange alternative, dans laquelle le couvercle de réceptacle n'est pas utilisé.

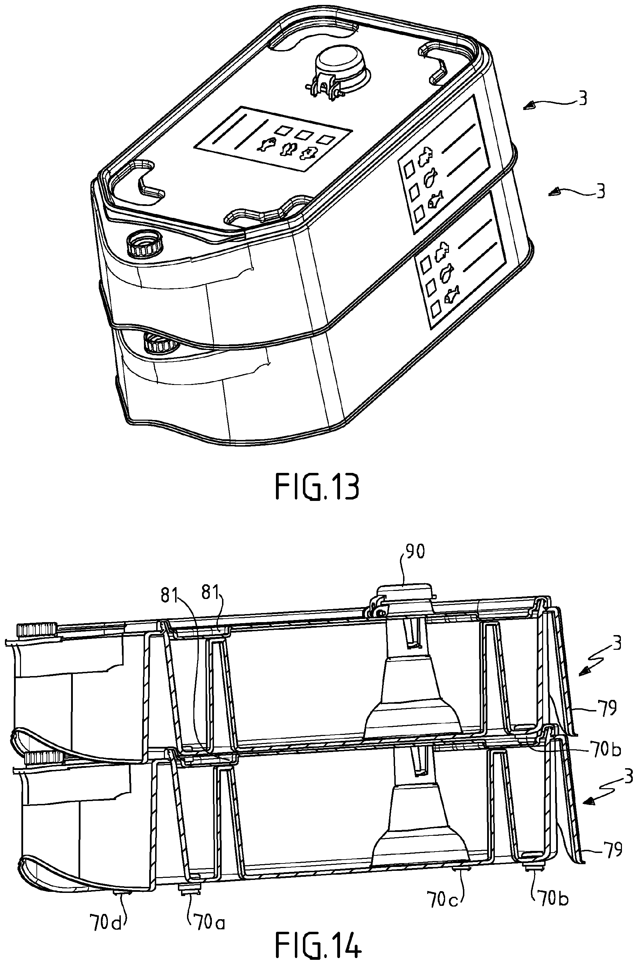

La figure 13 représente en perspective une configuration de rangement dans laquelle deux socles de vidange illustrés sur les figures 1, 2, 5 et 6 sont empilés.
La figure 14 est une première vue en coupe longitudinale des socles de vidange empilés illustrés sur la figure 13.

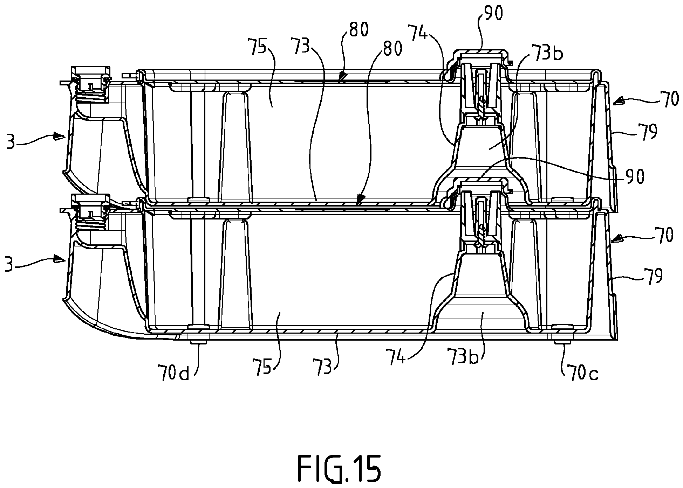

La figure 15 est une deuxième vue en coupe longitudinale des socles de vidange empilés illustrés sur les figures 13 et 14.

### Description des modes de réalisation

L'ensemble de cuisson 1 illustré sur les figures 1 et 2 comprend un appareil électrique de cuisson 2 et un socle de vidange 3. Le socle de vidange 3 est configuré pour porter l'appareil électrique de cuisson 2.

Tel que mieux visible sur la figure 2, le socle de vidange 3 comporte un réceptacle de vidange 70 et un couvercle de réceptacle 80. Un bouchon de couvercle 90 est monté sur le couvercle de réceptacle 80.

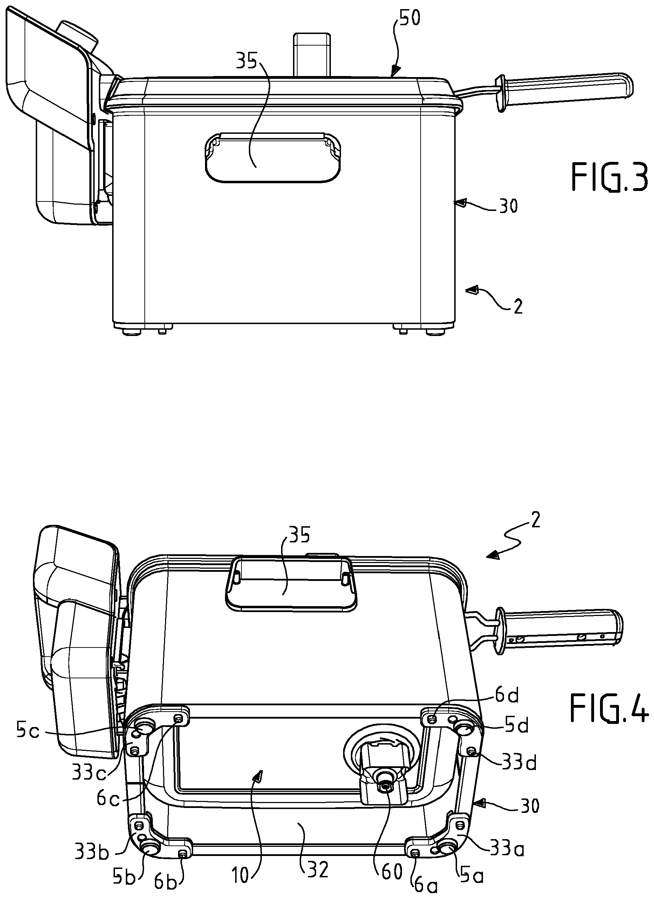

Tel que visible sur la figure 4, l'appareil électrique de cuisson 2 présente des appuis inférieurs 5a, 5b, 5c, 5d espacés les uns des autres. Les appuis inférieurs 5a, 5b, 5c, 5d sont configurés pour reposer sur un plan d'appui.

L'appareil électrique de cuisson 2 comporte une cuve 10 apte à recevoir un bain de cuisson. La cuve 10 est munie d'un dispositif de vidange 60 visible sur les figures 1, 2, 4, 9, 11 et 12.

L'appareil électrique de cuisson 2 comporte un dispositif électrique de chauffe 20. Dans l'exemple de réalisation illustré sur les figures 1 et 2, le dispositif électrique de chauffe 20 est prévu pour chauffer directement le bain de cuisson. A cet effet, le dispositif électrique de chauffe 20 comprend une résistance électrique 21 configurée pour être immergée dans un bain de cuisson contenu dans la cuve 10. Le dispositif électrique de chauffe 20 comprend aussi un boîtier de commande 22 sur lequel est monté la résistance électrique 21. Lorsque la résistance électrique 21 s'étend à l'intérieur de la cuve 10, le boîtier de commande 22 s'étend à l'extérieur de la cuve 10. En alternative ou en complément, le dispositif électrique de chauffe 20 pourrait notamment être configuré pour chauffer la cuve 10. Le dispositif électrique de chauffe 20 peut alors être fixé à la cuve 10, ou être amovible par rapport à la cuve 10. Le dispositif électrique de chauffe 20 peut être associé à un dispositif de contrôle de la température et à un dispositif de sécurité thermique, non représentés sur les figures. Le dispositif de contrôle de la température est par exemple un thermostat. Le dispositif de sécurité thermique est par exemple un fusible thermique ou un limiteur thermique réarmable. A titre de variante, le dispositif électrique de chauffe peut être configuré pour chauffer la cuve sans être immergé dans le bain de cuisson contenu dans la cuve. Le dispositif électrique de chauffe n'est alors pas nécessairement fixé à la cuve.

L'appareil électrique de cuisson 2 peut comporter un boîtier extérieur 30 logeant la cuve 10. Tel que mieux visible sur les figures 4, 9 et 10, le boîtier extérieur 30 forme une jupe 32. La jupe 32 présente quatre côtés. Le boîtier extérieur 30 comporte des pieds de boîtier 33a, 33b, 33c, 33d indépendants, mieux visibles sur la figure 4. Selon la réalisation illustrée sur les figures, les pieds de boîtier 33a, 33b, 33c, 33d sont agencés dans les angles inférieurs du boîtier extérieur 30 et s'étendent selon deux directions sous les côtés de la jupe. Ainsi les pieds de boîtier 33a, 33b, 33c, 33d présentent une forme en L. Les appuis inférieurs 5a, 5b, 5c, 5d sont agencés sous les pieds de boîtier 33a, 33b, 33c, 33d.

Tel que représenté sur les figures 1 et 2, la cuve 10 est montée amovible dans le boîtier extérieur 30. Le boîtier extérieur 30 peut présenter des organes de préhension 35, notamment deux poignées supérieures opposées. Selon une forme de réalisation usuelle, la cuve 10 présente un rebord extérieur 11 configuré pour reposer sur un bord supérieur 31 du boîtier extérieur 30, tel que mieux visible sur la figure 2. En alternative, la cuve 10 pourrait notamment être fixée au boîtier extérieur 30, ou l'appareil électrique de cuisson 2 pourrait notamment être dépourvu de boîtier extérieur 30.

L'appareil électrique de cuisson 2 peut comporter un panier 40 configuré pour contenir des aliments immergés dans un bain de cuisson contenu dans la cuve 10.

L'appareil électrique de cuisson 2 peut comporter un couvercle d'appareil 50 prévu pour couvrir la cuve 10. Si désiré, le couvercle d'appareil 50 peut être configuré pour être utilisé en configuration d'utilisation. En alternative le couvercle d'appareil 50 peut être configuré pour être utilisé seulement en configuration de rangement.

Le dispositif de vidange 60 comprend un clapet 61, mieux visible sur la figure 9. Le dispositif de vidange 60 est de préférence monté dans le fond de la cuve 10. Si désiré un clapet thermostatique 62 peut être agencé en amont du clapet 61, pour empêcher la vidange du bain de cuisson si la température de cuisson est trop élevée.

Le socle de vidange 3 présente un organe de commande 4, mieux visible sur les figures 5 et 7. L'organe de commande 4 est prévu pour actionner le clapet 61. Le clapet 61 est susceptible d'occuper une position de rappel stable fermée, en l'absence d'action extérieure, pour contenir le bain de cuisson dans la cuve 10, et une position ouverte, pour permettre la vidange du bain de cuisson, lorsque le clapet 61 est repoussé par l'organe de commande 4, tel que représenté sur les figures 9, 11 et 12. Ainsi l'organe de commande 4 est configuré pour déplacer le clapet 61 en position ouverte lorsque le socle de vidange 3 porte l'appareil électrique de cuisson 2. Plus particulièrement dans l'exemple de réalisation illustré sur les figures 1 à 15, le réceptacle de vidange 70 présente l'organe de commande 4. En alternative, le couvercle de réceptacle 80 pourrait présenter l'organe de commande 4.

Tel que visible sur les figures 5 et 7, le réceptacle de vidange 70 présente un fond de réceptacle 73 et une paroi latérale 75 s'élevant depuis le fond de réceptacle 73. Le réceptacle de vidange 70 présente une configuration allongée selon une direction. Le réceptacle de vidange 70 présente deux côtés 76a, 76b opposés. Les deux côtés 76a, 76b opposés s'étendent selon ladite direction. Un troisième côté 76c est agencé perpendiculairement aux deux côtés 76a, 76b. Un quatrième côté 76d s'étend à l'opposé du troisième côté 76c. La paroi latérale 75 ménage un conduit 77 débouchant dans une ouverture de versement 78, tel que mieux visible sur les figures 11 et 12. Le conduit 77 est agencé dans le quatrième côté 76d. Un bouchon de réceptacle 95 obture l'ouverture de versement 78. Le réceptacle de vidange 70 comporte une paroi périphérique extérieure 79 entourant la paroi latérale 75, mieux visible sur la figure 9. La paroi périphérique extérieure 79 s'étend à distance d'une partie inférieure de la paroi latérale 75 du réceptacle de vidange 70.

Tel que mieux visible sur les figures 9 et 10, le réceptacle de vidange 70 présente une face inférieure 73a comportant un logement 73b. Ainsi le logement 73b est agencé sous le fond de réceptacle 73. Tel que visible sur la figure 9, l'organe de commande 4 est issu de la face inférieure 73a du réceptacle de vidange 70 et le logement 73b s'étend en dessous de l'organe de commande 4.

Tel que mieux visible sur la figure 7, le réceptacle de vidange 70 comporte des appuis supérieurs 72a, 72b, 72c, 72d. Plus particulièrement, les appuis supérieurs 72a, 72b, 72c, 72d sont issus de la paroi latérale 75 du réceptacle de vidange 70. Les appuis supérieurs 72a, 72b, 72c, 72d appartiennent à des piliers 71a, 71b, 71c, 71d s'étendant depuis le fond de réceptacle 73. Les piliers 71a, 71b, 71c, 71d sont issus de la paroi latérale 75. Chacun des appuis supérieurs 72a, 72b, 72c, 72d est issu du fond de réceptacle 73. Tous les piliers 71a, 71b, 71c, 71d sont issus des côtés 76a, 76b opposés.

A titre de variante, au moins certains des piliers 71a, 71b, 71c, 71d pourraient être issus de l'un des côtés 76a, 76b opposés.

Tel que mieux visible sur la figure 10, le réceptacle de vidange 70 comporte des pieds de réceptacle 70a, 70b, 70c, 70d espacés les uns des autres.

Dans l'exemple de réalisation illustré sur les figures, l'organe de commande 4 est issu du réceptacle de vidange 70. Plus particulièrement, l'organe de commande 4 est issu du fond de réceptacle 73. L'organe de commande 4 est agencé à distance de la paroi latérale 75. Tel que mieux visible sur les figures 5, 7, 9, 11, 12 et 15, le fond de réceptacle 73 présente une protubérance 74 ménageant le logement 73b. Tel que mieux visible sur la figure 9, l'organe de commande 4 est formé par une pièce rapportée montée sur la protubérance 74.

Le couvercle de réceptacle 80 est configuré pour être monté sur le réceptacle de vidange 70. Le couvercle de réceptacle 80 ménage un passage 80a pour l'écoulement du bain de cuisson dans le réceptacle de vidange 70 lorsque le couvercle de réceptacle 80 est en place sur le réceptacle de vidange 70 pour former le socle de vidange 3 et que le socle de vidange 3 porte l'appareil électrique de cuisson 2. Ainsi lorsque le couvercle de réceptacle 80 est monté sur le réceptacle de vidange 70, le couvercle de réceptacle 80 ferme le réceptacle de vidange 70, à l'exception du passage 80a. Le couvercle de réceptacle 80 présente une bordure périphérique 87 présentant un logement inférieur 88, tel que mieux visible sur la figure 8. La bordure périphérique 87 présente une languette externe 89 destinée à faciliter le retrait du couvercle de réceptacle 80 du réceptacle de vidange 70. Le couvercle de réceptacle 80 présente une cheminée 80b s'élevant au-dessus d'une paroi d'obturation 86, tel que visible sur la figure 9. La paroi d'obturation 86 est entourée par la bordure périphérique 87. Plus particulièrement dans l'exemple de réalisation illustré sur les figures, la cheminée 80b ménage le passage 80a.

Le bouchon de couvercle 90 est prévu pour fermer le passage 80a. Dans l'exemple de réalisation illustré sur les figures, le bouchon de couvercle 90 est monté mobile sur le couvercle de réceptacle 80 entre une position de vidange, dans laquelle le passage 80a est libre, non représentée sur les figures, et une position de conservation, dans laquelle le passage 80a est obturé par le bouchon de couvercle 90, représentée sur les figures 1, 2, 5 et 6. Plus particulièrement dans l'exemple de réalisation illustré sur les figures, le bouchon de couvercle 90 est monté pivotant sur le couvercle de réceptacle 80. Le bouchon de couvercle 90 est porté par la cheminée 80b. Si désiré, le bouchon de couvercle 90 peut être amovible par rapport au couvercle de réceptacle 80. Tel que représenté sur les figures 9, 11 et 12, le bouchon de couvercle 90 a été retiré du couvercle de réceptacle 80. Le bouchon de couvercle 90 obture le passage 80a lorsque le socle de vidange 3 est en configuration de stockage du bain de cuisson contenu dans le réceptacle de vidange 70, tel que représenté sur la figure 6.

Sur les figures 9, 11 et 12, l'ensemble de cuisson 1 présente une configuration de vidange dans laquelle l'organe de commande 4 déplace le clapet 61 en position ouverte.

Sur les figures 9 et 11, la configuration de vidange correspond à une configuration de vidange recommandée, dans laquelle le socle de vidange 3 porte l'appareil électrique de cuisson 2. Lorsque l'ensemble de cuisson 1 présente cette configuration de vidange, l'appareil électrique de cuisson 2 repose sur le couvercle de réceptacle 80. Plus particulièrement dans l'exemple de réalisation illustré, le boîtier extérieur 30 repose sur le couvercle de réceptacle 80 lorsque l'ensemble de cuisson 1 présente cette configuration de vidange.

Le couvercle de réceptacle 80 comporte des butées latérales 81, mieux visibles sur la figure 5. Les butées latérales 81 sont configurées pour limiter les mouvements latéraux de l'appareil électrique de cuisson 2 reposant sur le couvercle de réceptacle 80. Plus particulièrement, les butées latérales 81 sont entourées par la bordure périphérique 87.

Le couvercle de réceptacle 80 présente une face supérieure comportant des dépressions 82a, 82b, 82c, 82d. Les butées latérales 81 sont formées par des parois latérales des dépressions 82a, 82b, 82c, 82d.

Le couvercle de réceptacle 80 présente quatre côtés principaux 83a, 83b, 83c, 83d. Chacune des dépressions 82a, 82b, 82c, 82d est agencée dans un angle 84a, 84b, 84c, 84d défini par deux côtés principaux 83a, 83b, 83c, 83d adjacents, en l'occurrence les côtés principaux 83a, 83d pour l'angle 84a, les côtés principaux 83a, 83c pour l'angle 84b, les côtés principaux 83c, 83b pour l'angle 84c, les côtés principaux 83b, 83d pour l'angle 84d, tel que bien visible sur la figure 5. L'un des côtés principaux 83a, 83b, 83c, 83d présente plusieurs pans.

A titre de variante, le couvercle de réceptacle 80 pourrait présenter plusieurs côtés principaux 83a, 83b, 83c, 83d, et l'une au moins des dépressions 82a, 82b, 82c, 82d pourrait être agencée dans un angle 84a, 84b, 84c, 84d défini par deux côtés principaux 83a, 83b, 83c, 83d adjacents.

A titre de variante, le couvercle de réceptacle 80 pourrait présenter une face supérieure comportant au moins une dépression, les butées latérales étant formées par des parois latérales de la dépression. Si désiré ladite dépression peut notamment être annulaire ou alvéolée.

Tel que partiellement visible sur les figures 9 et 11, les pieds de boîtier 33a, 33b, 33c, 33d indépendants sont configurés pour reposer sur le couvercle de réceptacle 80 lorsque l'ensemble de cuisson 1 présente la configuration de vidange. Plus particulièrement, les pieds de boîtier 33a, 33b, 33c, 33d reposent dans les dépressions 82a, 82b, 82c, 82d lorsque l'ensemble de cuisson 1 présente la configuration de vidange.

Les appuis supérieurs 72a, 72b, 72c, 72d s'étendent sous le couvercle de réceptacle 80 lorsque le couvercle de réceptacle 80 ferme le réceptacle de vidange 70. Tel que visible sur la figure 5, les appuis supérieurs 72a, 72b, 72c, 72d sont agencés en dessous des dépressions 82a, 82b, 82c, 82d. Lorsque l'appareil électrique de cuisson 2 repose sur le couvercle de réceptacle 80, les appuis inférieurs 5a, 5b, 5c, 5d sont agencés à l'aplomb des appuis supérieurs 72a, 72b, 72c, 72d.

Sur la figure 12, la configuration de vidange correspond à une configuration alternative, dans laquelle le réceptacle de vidange 70 porte l'appareil électrique de cuisson 2. L'appareil électrique de cuisson 2 repose sur les appuis supérieurs 72a, 72b, 72c, 72d lorsque l'ensemble de cuisson 1 présente cette configuration de vidange. Plus particulièrement dans l'exemple de réalisation illustré, le boîtier extérieur 30 repose sur le réceptacle de vidange 70 lorsque l'ensemble de cuisson 1 présente cette configuration de vidange.

L'appareil électrique de cuisson 2 présente des zones de support 6a, 6b, 6c, 6d, visibles sur la figure 4. Lorsque les appuis inférieurs 5a, 5b, 5c, 5d reposent sur un plan d'appui, les zones de support 6a, 6b, 6c, 6d s'étendent à distance dudit plan d'appui. Lorsque l'ensemble de cuisson 1 présente la configuration de vidange, les zones de support 6a, 6b, 6c, 6d reposent sur les appuis supérieurs 72a, 72b, 72c, 72d tel que partiellement visible sur la figure 12. Plus particulièrement dans l'exemple de réalisation illustré, les appuis inférieurs 5a, 5b, 5c, 5d sont agencés sous la jupe 32, et les zones de support 6a, 6b, 6c, 6d sont agencées sous la jupe 32. Les zones de support 6a, 6b, 6c, 6d sont issues des pieds de boîtier 33a, 33b, 33c, 33d. Les zones de support 6a, 6b, 6c, 6d sont distinctes des appuis inférieurs 5a, 5b, 5c, 5d.

Le réceptacle de vidange 70 et le couvercle de réceptacle 80 peuvent occuper une configuration d'empilement dans laquelle le réceptacle de vidange 70 repose sur le couvercle de réceptacle 80 et dans laquelle le logement 73b loge le bouchon de couvercle 90 fermant le passage 80a du couvercle de réceptacle 80, tel que visible sur la figure 15 illustrant deux socles de vidange 3 superposés.

Tel que représenté sur les figures 13 à 15, deux socles de vidange 3 peuvent être superposés. Les butées latérales 81 sont configurées pour limiter les mouvements latéraux du réceptacle de vidange 70 reposant sur le couvercle de réceptacle 80 en configuration d'empilement. Les pieds de réceptacle 70a, 70b, 70c, 70d sont configurés pour reposer sur le couvercle de réceptacle 80 lorsque le réceptacle de vidange 70 et le couvercle de réceptacle 80 occupent la configuration d'empilement. Plus particulièrement, les pieds de réceptacle 70a, 70b, 70c, 70d reposent dans les dépressions 82a, 82b, 82c, 82d lorsque le réceptacle de vidange 70 et le couvercle de réceptacle 80 occupent la configuration d'empilement. Les appuis supérieurs 72a, 72b, 72c, 72d s'étendent sous le couvercle de réceptacle 80 lorsque le couvercle de réceptacle 80 ferme le réceptacle de vidange 70. Plus particulièrement, les appuis supérieurs 72a, 72b, 72c, 72d sont agencés en dessous des dépressions 82a, 82b, 82c, 82d. La paroi périphérique extérieure 79 s'étend autour du couvercle de réceptacle 80 lorsque le réceptacle de vidange 70 et le couvercle de réceptacle 80 occupent la configuration d'empilement.

Les socles de vidange 3 illustrés sur les figures 13 à 15 s'utilisent de la manière suivante. L'utilisateur peut empiler deux socles de vidange 3 en plaçant les pieds de réceptacle 70a, 70b, 70c, 70d du réceptacle de vidange 70 du socle de vidange 3 placé en position supérieure dans les dépressions 82a, 82b, 82c, 82d du couvercle de réceptacle 80 du socle de vidange 3 placé en position inférieure. Les butées latérales 81 permettent de stabiliser latéralement le socle de vidange 3 placé en position supérieure sur le socle de vidange 3 placé en position inférieure.

Diverses modifications et/ou améliorations évidentes pour l'homme du métier peuvent être apportées au mode de réalisation de l'invention décrit dans la présente description sans sortir du cadre de l'invention défini par les revendications.

## Revendications

1. Socle de vidange (3) configuré pour porter un appareil électrique de cuisson (2) comportant une cuve (10) munie d'un dispositif de vidange (60) comprenant un clapet (61) susceptible d'occuper une position de rappel stable fermée et une position ouverte, le socle de vidange (3) comportant un réceptacle de vidange (70) et un couvercle de réceptacle (80), le socle de vidange (3) présentant un organe de commande (4) configuré pour déplacer le clapet (61) en position ouverte lorsque ledit socle de vidange (3) porte l'appareil électrique de cuisson (2), le couvercle de réceptacle (80) ménageant un passage (80a) pour l'écoulement du bain de cuisson dans le réceptacle de vidange (70) lorsque le socle de vidange (3) porte l'appareil électrique de cuisson (2), **caractérisé en ce que** le socle de vidange (3) comporte un bouchon de couvercle (90) obturant le passage (80a) lorsque le socle de vidange (3) est en configuration de stockage du bain de cuisson contenu dans le réceptacle de vidange (70), **en ce que** le réceptacle de vidange (70) présente une face inférieure (73a) comportant un logement (73b), et **en ce que** le réceptacle de vidange (70) et le couvercle de réceptacle (80) peuvent occuper une configuration d'empilement dans laquelle le réceptacle de vidange (70) repose sur le couvercle de réceptacle (80) et dans laquelle le logement (73b) loge le bouchon de couvercle (90) fermant le passage (80a) du couvercle de réceptacle (80).

2. Socle de vidange (3) selon la revendication 1, **caractérisé en ce que** l'organe de commande (4) est issu de la face inférieure (73a) du réceptacle de vidange (70) et **en ce que** le logement (73b) s'étend en dessous de l'organe de commande (4).

3. Socle de vidange (3) selon l'une des revendications 1 ou 2, **caractérisé en ce que** le couvercle de réceptacle (80) comporte des butées latérales (81) configurées pour limiter les mouvements latéraux du réceptacle de vidange (70) reposant sur le couvercle de réceptacle (80).

4. Socle de vidange (3) selon la revendication 3, **caractérisé en ce que** le couvercle de réceptacle (80) présente une face supérieure comportant des dépressions (82a, 82b, 82c, 82d) et **en ce que** les butées latérales (81) sont formées par des parois latérales des dépressions (82a, 82b, 82c, 82d).

5. Socle de vidange (3) selon la revendication 4, **caractérisé en ce que** le couvercle de réceptacle (80) présente plusieurs côtés principaux (83a, 83b, 83c, 83d), et **en ce que** l'une au moins des dépressions (82a, 82b, 82c, 82d) est agencée dans un angle (84a, 84b, 84c, 84d) défini par deux côtés principaux (83a, 83b, 83c, 83d) adjacents.

6. Socle de vidange (3) selon l'une des revendications 4 ou 5, **caractérisé en ce que** le couvercle de réceptacle (80) présente quatre côtés principaux (83a, 83b, 83c, 83d), et **en ce que** chacune des dépressions (82a, 82b, 82c, 82d) est agencée dans un angle (84a, 84b, 84c, 84d) défini par deux côtés principaux (83a, 83b, 83c, 83d) adjacents.

7. Socle de vidange (3) selon l'une des revendications 3 à 6, **caractérisé en ce que** le couvercle de réceptacle (80) présente une bordure périphérique (87) et **en ce que** les butées latérales (81) sont entourées par la bordure périphérique (87).

8. Socle de vidange (3) selon l'une des revendications 1 à 7, **caractérisé en ce que** le réceptacle de vidange (70) comporte des pieds de réceptacle (70a, 70b, 70c, 70d) espacés les uns des autres et configurés pour reposer sur le couvercle de réceptacle (80) lorsque le réceptacle de vidange (70) et le couvercle de réceptacle (80) occupent la configuration d'empilement.

9. Socle de vidange (3) selon la revendication 8 et l'une des revendications 4 à 6, **caractérisé en ce que** les pieds de réceptacle (70a, 70b, 70c, 70d) reposent dans les dépressions (82a, 82b, 82c, 82d) lorsque le réceptacle de vidange (70) et le couvercle de réceptacle (80) occupent la configuration d'empilement.

10. Socle de vidange (3) selon l'une des revendications 1 à 9, **caractérisé en ce que** le réceptacle de vidange (70) comporte des appuis supérieurs (72a, 72b, 72c, 72d) s'étendant sous le couvercle de réceptacle (80) lorsque le couvercle de réceptacle (80) ferme le réceptacle de vidange (70).

11. Socle de vidange (3) selon la revendication 10, **caractérisé en ce que** les appuis supérieurs (72a, 72b, 72c, 72d) sont issus d'une paroi latérale (75) du réceptacle de vidange (70).

12. Socle de vidange (3) selon l'une des revendications 10 ou 11, **caractérisé en ce que** les appuis supérieurs (72a, 72b, 72c, 72d) appartiennent à des piliers (71a, 71b, 71c, 71d) s'étendant depuis un fond de réceptacle (73) du réceptacle de vidange (70).

13. Socle de vidange (3) selon l'une des revendications 10 à 12 et selon l'une des revendications 4 à 6, **caractérisé en ce que** les appuis supérieurs (72a, 72b, 72c, 72d) sont agencés en dessous des dépressions (82a, 82b, 82c, 82d).

14. Socle de vidange (3) selon l'une des revendications 1 à 13, **caractérisé en ce que** le réceptacle de vidange (70) comporte une paroi périphérique extérieure (79), entourant une paroi latérale (75) du réceptacle de vidange (70), et **en ce que** la paroi périphérique extérieure (79) s'étend à distance d'une partie inférieure de la paroi latérale (75) du réceptacle de vidange (70).

15. Socle de vidange (3) selon la revendication 14, **caractérisé en ce que** la paroi périphérique extérieure (79) s'étend autour du couvercle de réceptacle (80) lorsque le réceptacle de vidange (70) et le couvercle de réceptacle (80) occupent la configuration d'empilement.

## Patentansprüche

1. Entleerungssockel (3), der konfiguriert ist, eine elektrische Gareinrichtung (2), die eine Wanne (10) umfasst, die mit einer Entleerungsvorrichtung (60) ausgestattet ist, die ein Ventil (61) umfasst, das eine geschlossene stabile Rückstellposition und eine offene Position einnehmen kann, wobei der Entleerungssockel (3) einen Entleerungsbehälter (70) und einen Behälterdeckel (80) umfasst, wobei der Entleerungssockel (3) ein Steuerelement (4) vorweist, das konfiguriert ist, um das Ventil (61) in die offene Position zu bewegen, wenn der Entleerungssockel (3) die elektrische Gareinrichtung (2) trägt, wobei der Behälterdeckel (80) einen Durchgang (80a) für die Strömung des Garbads in dem Entleerungsbehälter (70) aufnimmt, wenn der Entleerungssockel (3) die elektrische Gareinrichtung (2) trägt, **dadurch gekennzeichnet, dass** der Entleerungssockel (3) einen Deckelverschluss (90) umfasst, der den Durchgang (80a) verschließt, wenn der Entleerungssockel (3) in der Speicherkonfiguration des Garbads ist, das in dem Entleerungsbehälter (70) enthalten ist, dass der Entleerungsbehälter (70) eine untere Seite (73a) vorweist, die ein Gehäuse (73b) umfasst, und dass der Entleerungsbehälter (70) und der Behälterdeckel (80) eine Stapelkonfiguration einnehmen können, in der der Entleerungsbehälter (70) auf dem Behälterdeckel (80) aufliegt und in der das Gehäuse (73b) den Deckelverschluss (90) aufnimmt, der den Durchgang (80a) des Behälterdeckels (80) verschließt.

2. Entleerungssockel (3) nach Anspruch 1, **dadurch gekennzeichnet, dass** das Steuerelement (4) aus der Unterseite (73a) des Entleerungsbehälters (70) herauskommt, und dass sich das Gehäuse (73b) unterhalb des Steuerelements (4) erstreckt.

3. Entleerungssockel (3) nach einem der Ansprüche 1 oder 2, **dadurch gekennzeichnet, dass** der Behälterdeckel (80) seitliche Anschläge (81) umfasst, die konfiguriert sind, um seitliche Bewegungen des Entleerungsbehälters (70) zu begrenzen, der auf dem Behälterdeckel (80) aufliegt.

4. Entleerungssockel (3) nach Anspruch 3, **dadurch gekennzeichnet, dass** der Behälterdeckel (80) eine obere Seite vorweist, die Vertiefungen (82a, 82b, 82c, 82d) umfasst, und dass die seitlichen Anschläge (81) durch Seitenwände der Vertiefungen (82a, 82b, 82c, 82d) gebildet sind.

5. Entleerungssockel (3) nach Anspruch 4, **dadurch gekennzeichnet, dass** der Behälterdeckel (80) mehrere Hauptseiten (83a, 83b, 83c, 83d) vorweist, und dass zumindest eine der Vertiefungen (82a, 82b, 82c, 82d) in einem Winkel (84a, 84b, 84c, 84d) angeordnet ist, der durch zwei benachbarte Hauptseiten (83a, 83b, 83c, 83d) definiert ist.

6. Entleerungssockel (3) nach einem der Ansprüche 4 oder 5, **dadurch gekennzeichnet, dass** der Behälterdeckel (80) vier Hauptseiten (83a, 83b, 83c, 83d) vorweist, und dass jede der Vertiefungen (82a, 82b, 82c, 82d) in einem Winkel (84a, 84b, 84c, 84d) angeordnet ist, der durch zwei benachbarte Hauptseiten (83a, 83b, 83c, 83d) definiert ist.

7. Entleerungssockel (3) nach einem der Ansprüche 3 bis 6, **dadurch gekennzeichnet, dass** der Behälterdeckel (80) eine Umfangskante (87) vorweist, und dass die seitlichen Anschläge (81) durch den Umfangsrand (87) umgeben sind.

8. Entleerungssockel (3) nach einem der Ansprüche 1 bis 7, **dadurch gekennzeichnet, dass** der Entleerungsbehälter (70) Behälterfüße (70a, 70b, 70c, 70d) umfasst, die voneinander beabstandet und konfiguriert sind, um auf dem Behälterdeckel (80) aufzuliegen, wenn der Entleerungsbehälter (70) und der Behälterdeckel (80) die Stapelkonfiguration einnehmen.

9. Entleerungssockel (3) nach Anspruch 8 und einem der Ansprüche 4 bis 6, **dadurch gekennzeichnet, dass** die Behälterfüße (70a, 70b, 70c, 70d) in den Vertiefungen (82a, 82b, 82c, 82d) aufliegen, wenn der Entleerungsbehälter (70) und der Behälterdeckel (80) die Stapelkonfiguration einnehmen.

10. Entleerungssockel (3) nach einem der Ansprüche 1 bis 9, **dadurch gekennzeichnet, dass** der Entleerungsbehälter (70) obere Stützen (72a, 72b, 72c, 72d) umfasst, die sich unter dem Behälterdeckel (80) erstrecken, wenn der Behälterdeckel (80) den Entleerungsbehälter (70) verschließt.

11. Entleerungsboden (3) nach Anspruch 10, **dadurch gekennzeichnet, dass** die oberen Stützen (72a, 72b, 72c, 72d) aus einer Seitenwand (75) des Entleerungsbehälters (70) herauskommen.

12. Entleerungssockel (3) nach einem der Ansprüche 10 oder 11, **dadurch gekennzeichnet, dass** die oberen Auflagen (72a, 72b, 72c, 72d) zu Stützen (71a, 71b, 71c, 71d) gehören, die sich von einem Behälterboden (73) des Entleerungsbehälters (70) erstrecken.

13. Entleerungssockel (3) nach einem der Ansprüche 10 bis 12 und nach einem der Ansprüche 4 bis 6, **dadurch gekennzeichnet, dass** die oberen Auflagen (72a, 72b, 72c, 72d) unterhalb der Vertiefungen (82a, 82b, 82c, 82d) angeordnet sind.

14. Entleerungssockel (3) nach einem der Ansprüche 1 bis 13, **dadurch gekennzeichnet, dass** der Entleerungsbehälter (70) eine äußere Umfangswand (79) umfasst, die eine Seitenwand (75) des Entleerungsbehälters (70) umgibt, und dass sich die äußere Umfangswand (79) in einem Abstand von einem unteren Teil der Seitenwand (75) des Entleerungsbehälters (70) erstreckt.

15. Entleerungssockel (3) nach Anspruch 14, **dadurch gekennzeichnet, dass** sich die äußere Umfangswand (79) um den Behälterdeckel (80) erstreckt, wenn der Entleerungsbehälter (70) und der Behälterdeckel (80) die Stapelkonfiguration einnehmen.

## Claims

1. Drainage base (3) configured to carry an electric cooking appliance (2) comprising a tank (10) provided with a drainage device (60) comprising a valve (61) which can occupy a closed stable return position and an open position, the drainage base (3) comprising a drainage receptacle (70) and a receptacle cover (80), the drainage base (3) having a control member (4) configured to displace the valve (61) in open position when said drainage base (3) carries the electric cooking appliance (2), the receptacle cover (80) conserving a passage (80a) for the flow of the cooking bath into the drainage receptacle (70) when the drainage base (3) carries the electric cooking appliance (2), **characterised in that** the drainage base (3) comprises a cover stopper (90) blocking the passage (80a) when the drainage base (3) is in storage configuration of the cooking bath contained in the drainage receptacle (70), **in that** the drainage receptacle (70) has a lower face (73a) comprising a housing (73b), and **in that** the drainage receptacle (70) and the receptacle cover (80) can occupy a stack configuration wherein the drainage receptacle (70) rests on the receptacle cover (80) and wherein the housing (73b) houses the cover stopper (90) closing the passage (80a) of the receptacle cover (80).

2. Drainage base (3) according to claim 1, **characterised in that** the control member (4) comes from the lower face (73a) of the drainage receptacle (70) and **in that** the housing (73b) extends below the control member (4).

3. Drainage base (3) according to one of claims 1 or 2, **characterised in that** the receptacle cover (80) comprises lateral abutments (81) configured to limit the lateral movements of the drainage receptacle (70) resting on the receptacle cover (80).

4. Drainage base (3) according to claim 3, **characterised in that** the receptacle cover (80) has an upper face comprising depressions (82a, 82b, 82c, 82d) and **in that** the lateral abutments (81) are formed by lateral walls of the depressions (82a, 82b, 82c, 82d).

5. Drainage base (3) according to claim 4, **characterised in that** the receptacle cover (80) has several main sides (83a, 83b, 83c, 83d), and **in that** at least one of the depressions (82a, 82b, 82c, 82d) is arranged in an angle (84a, 84b, 84c, 84d) defined by two adjacent main sides (83a, 83b, 83c, 83d).

6. Drainage base (3) according to one of claims 4 or 5, **characterised in that** the receptacle cover (80) has four main sides (83a, 83b, 83c, 83d), and **in that** each of the depressions (82a, 82b, 82c, 82d) is arranged in an angle (84a, 84b, 84c, 84d) defined by two adjacent main sides (83a, 83b, 83c, 83d).

7. Drainage base (3) according to one of claims 3 to 6, **characterised in that** the receptacle cover (80) has a peripheral edge (87) and **in that** the lateral abutments (81) are surrounded by the peripheral edge (87).

8. Drainage base (3) according to one of claims 1 to 7, **characterised in that** the drainage receptacle (70) comprises receptacle feet (70a, 70b, 70c, 70d) spaced from one another and configured to rest on the receptacle cover (80) when the drainage receptacle (70) and the receptacle cover (80) occupy the stack configuration.

9. Drainage base (3) according to claim 8 and one of claims 4 to 6, **characterised in that** the receptacle feet (70a, 70b, 70c, 70d) rest in the depressions (82a, 82b, 82c, 82d) when the drainage receptacle (70) and the receptacle cover (80) occupy the stack configuration.

10. Drainage base (3) according to one of claims 1 to 9, **characterised in that** the drainage receptacle (70) comprises upper supports (72a, 72b, 72c, 72d) extending under the receptacle cover (80) when the receptacle cover (80) closed the drainage receptacle (70).

11. Drainage base (3) according to claim 10, **characterised in that** the upper supports (72a, 72b, 72c, 72d) come from a lateral wall (75) of the drainage receptacle (70).

12. Drainage base (3) according to one of claims 10 or 11, **characterised in that** the upper supports (72a, 72b, 72c, 72d) belong to pillars (71a, 71b, 71c, 71d) extending from a receptacle base (73) of the drainage receptacle (70).

13. Drainage base (3) according to one of claims 10 to 12 and according to one of claims 4 to 6, **characterised in that** the upper supports (72a, 72b, 72c, 72d) are arranged below the depressions (82a, 82b, 82c, 82d).

14. Drainage base (3) according to one of claims 1 to 13, **characterised in that** the drainage receptacle (70) comprises an outer peripheral wall (79), surrounding a lateral wall (75) of the drainage receptacle (70), and **in that** the outer peripheral wall (79) extends at a distance from a lower portion of the lateral wall (75) of the drainage receptacle (70).

15. Drainage base (3) according to claim 14, **characterised in that** the outer peripheral wall (79) extends around the receptacle cover (80) when the drainage receptacle (70) and the receptacle cover (80) occupy the stack configuration.
